# DEMANDE DE BREVET EUROPEEN

(11) **EP 4 113 081 A1**
(43) Date de publication de la demande: **04.01.2023**
(21) Numéro de dépôt: 22182001.2
(22) Date de dépôt: 29.06.2022
(51) Int. Cl.: G01K 1/08, G01K 13/00

(54) **ENSEMBLE DE MESURE DE LA TEMPÉRATURE D'UNE SURFACE D'UN OBJET LORS DE LA RÉALISATION D'UN TRAITEMENT THERMIQUE, ENSEMBLE ET PROCÉDÉ DE TRAITEMENT THERMIQUE**

(30) Priorité: 30.06.2021 FR 2107042
(71) Demandeur: Framatome, 92400 Courbevoie (FR)
(72) Inventeur: MOURGUES CODERN, Alejandro, 71670 LE BREUIL (FR); SEIXAS, Mario, 71450 BLANZY (FR); MENELET, Kewin, 71240 VARENNES LE GRAND (FR)
(74) Mandataire: Lavoix

(57) **Abrégé**

L'ensemble de mesure comprend un diffuseur thermique (20) configuré pour être interposé entre un dispositif de chauffage (10) et une région de mesure (8A) d'une surface de traitement (8) de telle sorte que la région de mesure (8A) est chauffée par le dispositif de chauffage (10) à travers le diffuseur thermique (20), le diffuseur thermique (20) comprenant une première surface (22) destinée à être appliquée contre la région de mesure (8A) et une deuxième surface (24) destinée à être recouverte par le dispositif de chauffage (10), et un capteur de température (28) logé dans une cavité de réception (32) ménagée dans la première surface (22) pour être en contact avec la région de mesure (8A) et mesurer la température de la région de mesure (8A), en étant recouvert par le diffuseur thermique (20).

## Description

La présente invention concerne le domaine du traitement thermique d'un objet, en particulier un assemblage de pièces métalliques soudées entre elles.

Une centrale nucléaire comprend des équipements tels qu'une cuve de réacteur, un pressuriseur, un générateur de vapeur, des tuyaux de raccordement, des picages et/ou des vannes, qui sont réalisés par soudage de pièces métalliques entre elles ou assemblés entre eux par soudage.

Le soudage de pièces métalliques entre elles peut induire des contraintes mécaniques résiduelles dans les pièces métalliques et dans l'assemblage formé des pièces métalliques soudées entre elles.

Il est possible de soumettre un assemblage de pièces métalliques soudées entre elles à un traitement thermique de détensionnement (TTD), qui consiste à porter une zone de soudure entre les pièces métalliques (incluant la(les) soudure(s) et la(les) zone(s) affectée(s) thermiquement par le soudage), à une température donnée pendant un temps donné, afin de relâcher les contraintes mécaniques résiduelles induites par le soudage et d'obtenir des caractéristiques mécaniques appropriées pour la zone de soudure, et pour l'assemblage de pièces métalliques.

Un traitement thermique de détensionnement peut être appliqué globalement sur un assemblage de pièces métalliques soudées dans son ensemble, en plaçant celui-ci dans un four, ou localement sur une zone de soudure de l'assemblage, par exemple par chauffage à l'aide de résistances électriques.

Lorsque les dimensions d'un assemblage de pièces métalliques soudées le permettent, un traitement thermique de détensionnement global de l'assemblage peut être réalisé dans un four.

Pour les gros assemblages ou lors de l'assemblage des pièces métalliques entre elles lors de leur installation sur site (y compris l'assemblage de tuyaux de raccordement, de picages et de vannes aux autres équipements) les traitements thermiques de détensionnement locaux sont incontournables.

Des assemblages de pièces métalliques tels qu'une enceinte de pressuriseur ou une enceinte de générateur de vapeur présentent généralement des dimensions nécessitant un traitement thermique de détensionnement local, au moins pour certaines zones de soudure de l'enceinte de pressuriseur ou de l'enceinte de générateur de vapeur.

Le raccordement sur site de tuyaux de raccordement entre eux et à une enceinte de réacteur nucléaire, à une enceinte pressuriseur, à une enceinte de générateur de vapeur, à des corps de vannes ou à des picages, nécessite un traitement thermique de détensionnement local.

En pratique, lors de l'application de certains traitements thermiques de détensionnement locaux réalisés sur des zones de soudure d'assemblages de pièces métalliques de centrale nucléaire, il a été constaté un écart entre la température effective atteinte dans la zone de soudure lors du traitement thermique de détensionnement local et les plages de températures requises. Cet écart vient de la difficulté à mesurer la température de peau des assemblages de pièces métalliques soumises aux traitement thermiques de détensionnement locaux.

Même si l'intégrité des assemblages de pièces métalliques concernés n'est pas remise en cause, le non-respect des plages de température requises constitue un écart au référentiel technique de fabrication.

Un des buts de l'invention est de proposer un ensemble de mesure de la température d'une surface d'un objet permettant la réalisation d'un traitement thermique de manière précise.

A cet effet, l'invention propose un ensemble de mesure configuré pour mesurer la température d'une surface de traitement d'un objet lors de la réalisation d'un traitement thermique de l'objet à l'aide d'un dispositif de chauffage configuré pour recouvrir et chauffer la surface de traitement, l'ensemble de mesure comprenant un diffuseur thermique configuré pour être interposé entre le dispositif de chauffage et une région de mesure de la surface de traitement de telle sorte que la région de mesure est chauffée par le dispositif de chauffage à travers le diffuseur thermique, le diffuseur thermique comprenant une première surface destinée à être appliquée contre la région de mesure et une deuxième surface destinée à être recouverte par le dispositif de chauffage, et un capteur de température logé dans une cavité de réception ménagée dans la première surface pour être en contact avec la région de mesure et mesurer la température de la région de mesure, en étant recouvert par le diffuseur thermique.

Selon des modes de réalisation particuliers, l'ensemble de mesure de température comprend une ou plusieurs des caractéristiques optionnelles suivantes, prise individuellement ou selon toutes les combinaisons techniquement possibles :
- le capteur de température est maintenu dans la cavité de réception en étant espacé des parois de la cavité de réception ;
- il comprend un corps thermiquement isolant inséré dans la cavité de réception de manière à isoler thermiquement le capteur de température des parois de la cavité de réception ;
- le diffuseur thermique s'amincit depuis une partie centrale dans laquelle est formé la cavité de réception vers au moins un bord du diffuseur thermique ;
- le diffuseur thermique s'amincit depuis la partie centrale vers deux bords latéraux opposés du diffuseur thermique ;
- il comprend un élément de positionnement disposé en saillie sur la deuxième surface du diffuseur thermique et configuré pour s'insérer dans une ouverture du dispositif de chauffage ;
- la première surface est conformée à la région de mesure ;
- la première surface est plane, la première surface est une portion de surface cylindrique, la première surface est une portion de surface sphérique ou la première surface est une portion de surface conique ;
- le diffuseur thermique est métallique
- le diffuseur thermique est réalisé en une seule pièce de matière ;
- le diffuseur thermique présente la forme d'une plaque, la première surface et la deuxième surface étant les deux faces opposées du diffuseur thermique en forme de plaque.

L'invention concerne aussi un ensemble de traitement thermique comprenant un dispositif de chauffage configuré pour être appliqué sur une surface de traitement d'un objet pour la chauffer, et un ensemble de mesure tel que défini ci-dessus.

Selon des modes de réalisation particuliers, l'ensemble traitement thermique comprend une ou plusieurs des caractéristiques optionnelles suivantes, prise individuellement ou selon toutes les combinaisons techniquement possibles :
- le dispositif de chauffage est configuré pour chauffer l'objet par conduction thermique entre le dispositif de chauffage et la surface de traitement ;
- le dispositif de chauffage est formé d'une pluralité d'éléments chauffants articulés entre eux de telle manière que le dispositif de chauffage est flexible et conformable à la surface de traitement ;
- il comprend une contre-plaque destinée à être disposée entre le dispositif de chauffage et un dispositif de maintien configuré pour maintenir le dispositif de chauffage appliqué contre la surface de traitement, au droit du diffuseur thermique ;
- le dispositif de chauffage est configuré pour chauffer la surface de traitement à une température située dans une plage de température prédéterminée et/ou pendant une durée prédéterminée ;
- la plage de température est comprise entre 300°C et 650°C ;
- la durée prédéterminée est comprise entre 30 minutes et 4 heures.

L'invention concerne également un procédé de traitement thermique d'un objet, en particulier d'un assemblage de pièces métalliques, en particulier d'une centrale nucléaire, le procédé de traitement thermique comprenant l'application d'un diffuseur thermique sur une région de mesure d'une surface de traitement de l'objet, le diffuseur thermique possédant une première surface en appui sur la région de mesure et une deuxième surface opposée à la première surface, un capteur de température étant logé dans une cavité de réception ménagée dans la première surface pour mesurer la température de la région de mesure, le positionnement d'un dispositif de chauffage sur la surface de traitement, le dispositif de chauffage recouvrant le diffuseur thermique, et le chauffage de la surface de traitement à l'aide du dispositif de chauffage, la région de mesure étant chauffée par le dispositif de chauffage à travers le diffuseur thermique.

Selon des modes de mise en œuvre particuliers, le procédé de traitement thermique comprend une ou plusieurs des caractéristiques optionnelles suivantes, prise individuellement ou selon toutes les combinaisons techniquement possibles :
- le dispositif de chauffage est commandé en fonction d'un signal de mesure émis par le capteur de température pour chauffer la surface de traitement à une température située dans une plage de température prédéterminée et/ou pendant une durée prédéterminée ;
- la plage de température est comprise entre 300°C et 650°C ;
- la durée prédéterminée est comprise entre 30 minutes et 4 heures ;
- l'objet est un assemblage de pièces métalliques soudées entre elles.
- la surface de traitement inclut une zone de soudure entre les pièces métalliques de l'assemblage.

L'invention et ses avantages seront mieux compris à la lecture de la description qui va suivre, données uniquement à titre d'exemple non limitatif, et faite en référence aux dessins annexés, sur lesquels :
- la Figure 1 est vue schématique en coupe explosée d'un ensemble de traitement thermique comprenant un ensemble de mesure de température possédant un diffuseur thermique;
- la Figure 2 est une vue schématique en coupe assemblée de l'ensemble de traitement thermique de la Figure 1 positionné sur une zone d'un composant à traiter thermiquement ;
- la Figure 3 est une vue schématique de dessous du diffuseur thermique de l'ensemble de de température de l'ensemble de traitement thermique des Figures 1 et 2 ;
- la Figure 4 est une vue schématique en coupe explosée d'un ensemble de traitement thermique comprenant un ensemble de mesure de température possédant un diffuseur thermique ;
- la Figure 5 est une vue schématique en coupe assemblée de l'ensemble de traitement thermique de la Figure 4 positionné sur une zone d'un composant à traiter thermiquement ; et
- la Figure 6 est une vue schématique de dessous du diffuseur thermique de l'ensemble de traitement thermique des Figures 4 et 5.

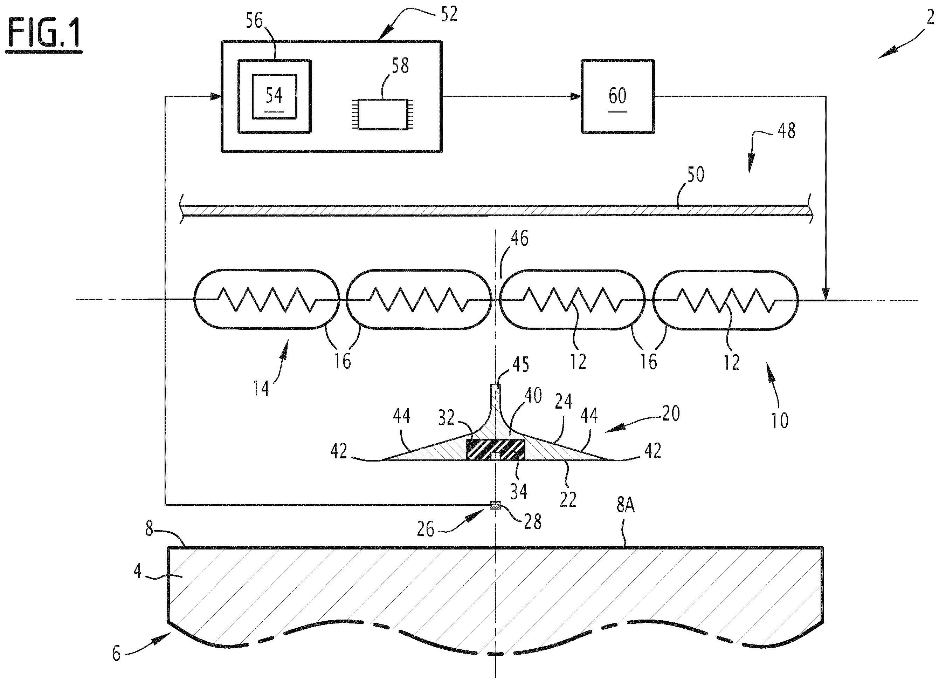

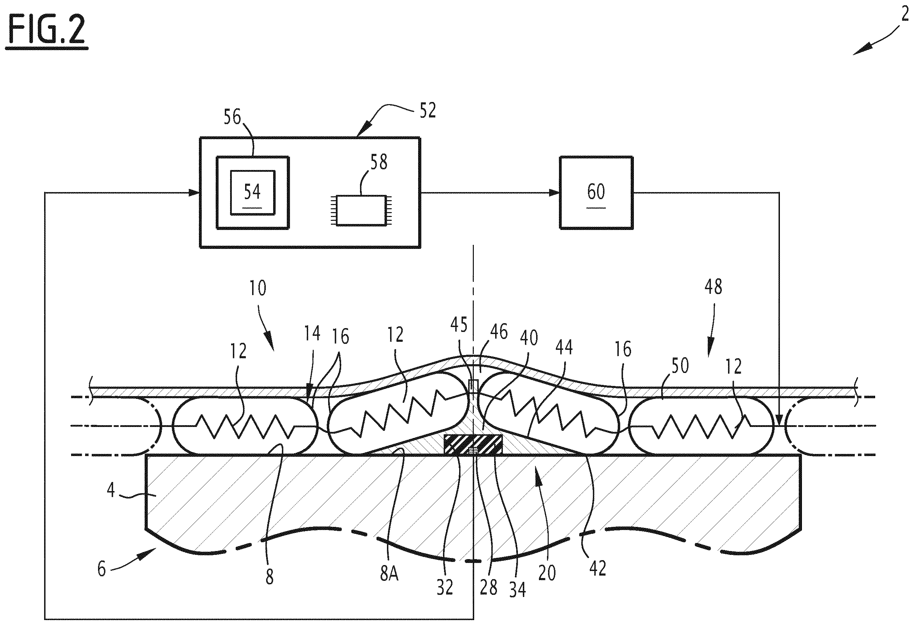

L'ensemble de traitement thermique 2 illustré sur les Figures 1 et 2 est configuré pour réaliser un traitement thermique local d'un objet, en particulier un traitement thermique local d'une zone de soudure 4 d'un assemblage 6 de pièces métalliques soudées entre elles.

L'assemblage 6 présente des zones de soudures entre les pièces métalliques. Chaque zone de soudure ou zone affectée thermiquement (aussi désignée par l'acronyme ZAT) est une zone de l'assemblage 6 dans laquelle se situe au moins une soudure entre les pièces métalliques de l'assemblage 6, et qui est affectée thermiquement par la(les) soudure(s).

La zone de soudure 4 inclut une ou des soudure(s) et au moins une zone affectée thermiquement par la(les) soudure(s).

L'assemblage 6 est par exemple un composant de centrale nucléaire tel qu'une enceinte de réacteur nucléaire, une enceinte d'un générateur de vapeur de centrale nucléaire, une enceinte d'un pressuriseur de centrale nucléaire, un tuyau de raccordement d'une centrale nucléaire, un picage d'une centrale nucléaire, un corps d'une vanne d'une centrale nucléaire, ou un assemblage d'un ou e plusieurs de ces composants de centrale nucléaire.

L'ensemble de traitement thermique 2 est configuré pour la réalisation d'un traitement thermique local de l'assemblage 6 dans la zone de soudure 4.

L'ensemble de traitement thermique 2 est configuré pour être appliqué sur une surface de traitement 8 incluant la zone de soudure 4.

La surface de traitement 8 est par exemple une surface externe de l'assemblage 6. En variante, si l'assemblage 6 est creux, il pourrait s'agir d'une surface interne de l'assemblage 6.

L'ensemble de traitement thermique 2 comprend un dispositif de chauffage 10 configuré pour être appliqué sur la surface de traitement 8 en la recouvrant pour chauffer l'assemblage 6 au droit de la surface de traitement 8, y inclus la zone de soudure 4.

Le dispositif de chauffage 10 est configuré pour le chauffage de l'assemblage 6 par conduction thermique entre le dispositif de chauffage 10 et la surface de traitement 8.

Dans un exemple de réalisation, le dispositif de chauffage 10 est configuré pour générer de la chaleur par effet Joule et transmettre cette chaleur à l'assemblage 6, notamment par conduction thermique entre le dispositif de chauffage 10 et l'assemblage 6.

Le dispositif de chauffage 10 comprend par exemple des résistances électriques 12 configurées pour générer de la chaleur par effet Joule lorsqu'elles sont alimentées en électricité, la chaleur générée par les résistances électriques 12 étant transférée à la zone de soudure 4 sur laquelle le dispositif de chauffage 10 est appliqué, par conduction thermique.

De préférence, dans un exemple de réalisation, le dispositif de chauffage 10 est flexible de manière à pouvoir se conformer à la surface de traitement 8 contre laquelle le dispositif de chauffage 10 est appliqué.

Telle qu'illustré sur la Figure 2, la surface de traitement 8 est plane. En variante, la surface de traitement 8 présente une forme tridimensionnelle non-plane.

Dans un exemple de réalisation particulier, la surface de traitement 8 est une portion de cylindre, une portion de sphère ou une portion de cône.

Une surface de traitement 8 en portion de cylindre, en portion de sphère ou en portion de cône se retrouve par exemple sur une enceinte de réacteur nucléaire, une enceinte de générateur de vapeur, une enceinte de pressuriseur, un tuyau de raccordement, un picage ou un corps de vanne.

Une enceinte de générateur de vapeur ou de pressuriseur comprend généralement un corps tubulaire qui est formé d'un ou plusieurs tronçons, chaque tronçon étant cylindrique ou tronconique, le corps tubulaire étant fermé à chacune de ses deux extrémités par un embout qui est par exemple sphérique, les tronçons et les embouts étant soudés entre eux. Les cordons de soudures sont ainsi formés sur des surfaces de l'enceinte qui sont des portions de cylindre, des portions de sphère ou des portions de cône, ces surfaces nécessitant un traitement thermique de détensionnement.

Le dispositif de chauffage 10 comprend par exemple une nappe chauffante 14 flexible propre à appliquer sur la surface de traitement 8 en se conformant à la surface de traitement 8.

La nappe chauffante 14 est par exemple formée d'une pluralité d'éléments chauffants 16 reliés entre eux de manière articulée. L'articulation des éléments chauffants 16 entre eux permet de conférer de la flexibilité à la nappe chauffante 14.

Chaque élément chauffant 16 contient par exemple une ou plusieurs résistance(s) électrique 12.

L'ensemble de traitement thermique 2 comprend un ensemble de mesure 18 configuré pour mesurer la température de la surface de traitement 8 au cours de la réalisation du traitement thermique.

L'ensemble de mesure 18 comprend un diffuseur thermique 20 destiné à être interposé entre le dispositif de chauffage 10 et la région de mesure 8A de la surface de traitement 8.

La région de mesure 8A est par exemple une région de la zone de soudure 4, ou une région proche de la zone de soudure 4 tout en étant située hors de la zone de soudure 4, i.e. hors d'une zone affectée thermiquement par une soudure.

Lors de la réalisation d'un traitement thermique d'une zone de soudure 4, la surface de traitement 8 recouverte par le dispositif de chauffage 10 est généralement plus étendue que la zone de soudure 4.

Elle inclut par exemple deux zones intermédiaires situées de part et d'autre de la zone de soudure 4. Chaque zone intermédiaire est située entre la zone de soudure 4 et une zone non chauffée (i.e. non recouverte par le dispositif de chauffage 10). Ceci permet d'assurer une certaine homogénéité de la température atteinte dans la zone de soudure 4, un gradient de température apparaissant inévitablement dans chaque zone intermédiaire, entre la zone de soudure et la zone non chauffée entre lesquelles se situe cette zone intermédiaire.

Lors de la réalisation d'un traitement thermique d'une zone de soudure 4, la région de mesure 8A peut être située hors de la zone de soudure 4, en particulier dans une zone intermédiaire, dès lors que l'ensemble de mesure 18 permet de mesurer avec précision une température de la surface de traitement 8 permettant de s'assurer que la température atteinte dans la zone de soudure 4 est appropriée.

Le diffuseur thermique 20 est configuré pour être appliqué sur la région de mesure 8A de la surface de traitement 8 en étant recouvert par le dispositif de chauffage 10.

Le diffuseur thermique 20 est configuré pour que, au cours du traitement thermique, la région de mesure 8A soit chauffée par le dispositif de chauffage 10 à travers le diffuseur thermique 20 interposé entre la région de mesure 8A et le dispositif de chauffage 10.

Le diffuseur thermique 20 comprend une première surface 22 destinée à être appliquée contre la région de mesure 8A de la surface de traitement 8, et une deuxième surface 24 opposée à la première surface 22 et destinée à être recouverte par le dispositif de chauffage 10 en étant en contact avec celui-ci.

Le diffuseur thermique 20 est configuré de telle manière que la première surface 22 est conformée ou conformable à la région de mesure 8A de la surface de traitement 8.

En fonction de l'état de surface de la région de mesure 8A et/ou de la première surface 22, une pâte thermique peut être interposée entre la première surface 22 et la région de mesure 8A de façon à améliorer le contact thermique.

Dans un exemple de réalisation, la première surface 22 a une forme lui permettant d'épouser la région de mesure 8A de la surface de traitement 8.

La première surface 22 est par exemple plane ou tridimensionnelle non-plane, en particulier en forme de portion de cylindre, en forme de portion de sphère ou en forme de portion de cône.

En particulier, si la surface de traitement 8 est plane, en forme de portion de cylindre en forme de portion de sphère ou en forme de portion de cône, la première surface 22 est par exemple respectivement plane, en forme de portion de cylindre, en forme de portion de sphère ou en forme de portion de cône.

L'ensemble de traitement thermique 2 comprend un dispositif de mesure de température 26 configuré pour mesurer la température de la surface de traitement 8 (ou « température de peau ») au cours du traitement thermique.

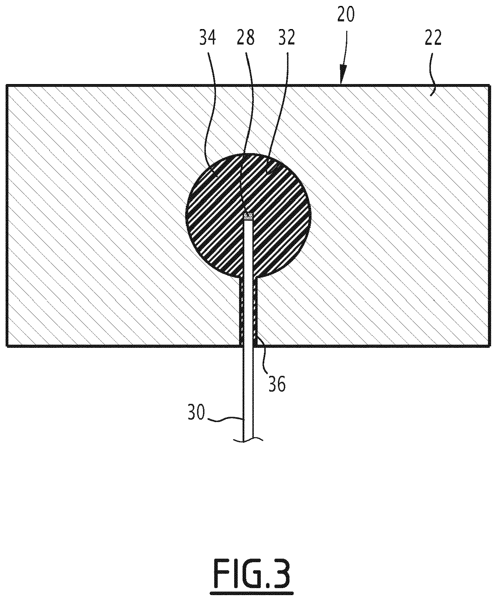

Le dispositif de mesure de température 26 possède un capteur de température 28 auquel est relié un câble de raccordement 30 (Figure 3) pour transmettre un signal de mesure généré par le capteur de température 28 et, optionnellement, pour alimenter le capteur de température 28 en électricité, si nécessaire.

Le capteur de température 28 est par exemple un thermocouple ou un détecteur de température à résistance (ou RTD de l'anglais « Résistance Temperature Detector »), par exemple une sonde de type Pt100.

Le diffuseur thermique 20 possède une cavité de réception 32 qui est ménagée dans la première surface 22 pour recevoir le capteur de température 28. La cavité de réception 32 est ménagée dans le diffuseur thermique 20 et débouche sur la première surface 22.

Avantageusement, la cavité de réception 32 est ménagée dans une région centrale de la deuxième surface 24.

Le capteur de température 28 logé dans la cavité de réception 32 du diffuseur thermique 20 de manière à être en contact avec la région de mesure 8A de la surface de traitement 8 lorsque le la première surface 22 du diffuseur thermique 20 est appliqué contre la surface de traitement 8. De préférence, le capteur de température 28 est reçu dans la cavité de réception 32 en étant espacé des parois de la cavité de réception 32. Le capteur de température 28 est ainsi espacé du diffuseur thermique 20. Le capteur de température 28 est logé dans la cavité de réception 32 sans contact entre le capteur de température 28 et le diffuseur thermique 20.

Un capteur de température 28 prévu sous la forme d'un thermocouple ou d'un détecteur de température à résistance, peut être réalisé avec une géométrie cylindrique ou plate facilitant son intégration dans la cavité 32, en particulier sans que le capteur de température 28 ne touche les parois de la cavité de réception 32.

De préférence, le capteur de température 28 présente une forme et des dimensions telles qu'il s'inscrit dans un cylindre imaginaire de rayon égal ou inférieur à 2 mm, en particulier égal ou inférieur à 1 mm.

Dans un exemple de réalisation, l'ensemble de traitement thermique 2 comprend un corps calorifuge ou corps thermiquement isolant 34 inséré dans la cavité de réception 32, le corps thermiquement isolant 34 étant interposé entre le capteur de température 28 et les parois de la cavité de réception 32.

Le corps thermiquement isolant 34 possède une surface de réception qui est de niveau avec la première surface 22 et qui présente un logement pour recevoir le capteur de température 28, de sorte que le capteur de température 28 en contact avec la région de mesure 8A lorsque le diffuseur thermique 20 muni du capteur de température 28 est appliqué contre la région de mesure 8A.

Dans un exemple de réalisation, le corps thermiquement isolant 34 est réalisé dans un matériau thermiquement isolant de telle manière que la cavité 32 soit remplie et que le logement recevant le capteur de température 28 puisse assurer le plaquage de capteur de température 28 sur la région de mesure 8A.

Ainsi, le capteur de température 28 est reçu dans la cavité de réception 32 en étant isolé thermiquement du diffuseur thermique 20. Ceci limite la transmission de chaleur du diffuseur thermique 20 au capteur de température 28.

Le corps thermiquement isolant 34 est réalisé dans un matériau thermiquement isolant, présentant une conductivité thermique faible.

Dans un exemple de réalisation, le corps thermiquement isolant 34 est réalisé dans un matériau présentant une conductivité thermique strictement inférieur à celle d'un matériau dans lequel est réalisé le diffuseur thermique 20.

Le corps thermiquement isolant 34 est par exemple réalisée en Mica, en laine minérale, ou en silicarton.

Optionnellement, la première surface 22 présente un canal de raccordement 36 (Figure 3) s'étendant dans le diffuseur thermique 20 à partir la cavité de réception 32. Ce canal de raccordement 36 permet le passage d'un câble de raccordement 30.

Le canal de raccordement 36 se présente par exemple sous la forme d'une gorge ménagée dans la première surface 22 entre la cavité de réception 32 et la périphérie de la première surface 22.

En variante, le canal de raccordement 36 se présente sous la forme d'un perçage réalisé à travers le diffuseur thermique 20.

Le diffuseur thermique 20 est par exemple réalisé en une seule pièce de matière. Ceci permet d'obtenir un diffuseur thermique 20 transmettant bien la chaleur entre la deuxième surface 24 destinée à être recouverte par le dispositif de chauffage 10 et première surface 22 destinée à être appliquée contre la région de mesure.

Le diffuseur thermique 20 est par exemple réalisé dans un matériau métallique, en particulier, en aluminium, en cuivre ou acier ferrique. L'aluminium et le cuivre sont des matériaux métalliques conduisant bien la chaleur. Le cuivre possède l'avantage d'être généralement compatible avec une utilisation dans une centrale nucléaire. En outre, le cuivre est un matériau ductile, ce qui permet au diffuseur thermique de se conformer à la surface de traitement 8 de l'assemblage 6 pour assurer un bon contact entre la première surface 22 et la surface de traitement 8, et une bonne conduction thermique.

Avantageusement, comme illustré sur les Figures 1 à 3, le diffuseur thermique 20 présente la forme d'une plaque, la première surface 22 et la deuxième surface 24 étant les deux faces opposées du diffuseur thermique 20 en forme de plaque.

Dans un exemple de réalisation, le diffuseur thermique 20 possède une partie centrale 40 dans laquelle est formée la cavité de réception 32, et deux bords latéraux 42 opposés situés de part et d'autre de la partie centrale 40. Les deux bords latéraux 42 sont par exemple parallèles.

Dans un exemple de réalisation, le diffuseur thermique 20 présente une épaisseur qui diminue progressivement de sa partie centrale 40 vers chacun de ses deux bords latéraux 42.

Le diffuseur thermique 20 s'amincie progressivement de sa partie centrale 40 vers chacun de ses deux bords 42 opposés.

La deuxième surface 24 du diffuseur thermique 20 présente par exemple deux rampes 44, chaque rampe 44 montant depuis un des deux bords latéraux 42 vers la partie centrale 40.

Chaque rampe 44 est par exemple plane. Ceci permet l'application à plat d'un élément chauffant 16 sur chaque rampe 44 avec un bon contact entre l'élément chauffant 16 et le diffuseur thermique.

Le diffuseur thermique 20 présente dans sa partie centrale 40 une épaisseur strictement supérieure à son épaisseur au niveau de chacun de ses deux bords latéraux 42.

L'épaisseur de la partie centrale 40 du diffuseur thermique 20 est strictement supérieure à la profondeur de la cavité de réception 32. Ceci permet de loger la cavité de réception 32 dans la partie centrale 40.

L'épaisseur du diffuseur thermique 20 au niveau de chacun des deux bords latéraux 42 opposés est strictement inférieure à la profondeur de la cavité de réception 32.

Ceci permet de limiter l'épaisseur du diffuseur thermique 20 au niveau de ses deux bords latéraux 42 pour assurer une transition satisfaisante du dispositif de chauffage 10 entre le diffuseur thermique 20 et la surface de traitement 8.

Optionnellement, un élément de positionnement 45 est disposé en saillie sur la deuxième surface 24 du diffuseur thermique 20.

Lorsque le diffuseur thermique 20 présente deux bords latéraux 42, l'élément de positionnement 45 est par exemple situé sensiblement au milieu de la deuxième surface 24, à mi-distance entre les deux bords latéraux 42. L'élément de positionnement 45 est par exemple allongé en étant sensiblement parallèle aux deux bords latéraux 42.

Avantageusement, le dispositif de chauffage 10 comprend une ouverture 46 dans laquelle l'élément de positionnement 45 s'insère lorsque le dispositif de chauffage 10 est positionné par-dessus le diffuseur thermique 20.

Ceci permet ainsi de positionner le dispositif chauffage 10 relativement au diffuseur thermique 20 pour assurer que le dispositif de chauffage 10 est appliqué de manière satisfaisante contre le diffuseur thermique 20.

Lorsque le dispositif de chauffage 10 comprend une nappe chauffante 14 formée d'élément chauffants 16 articulés entre eux, l'ouverture 46 est par exemple délimitée entre deux éléments chauffants 16 adjacents.

Ainsi, lors de l'application du dispositif de chauffage 10, ces deux éléments chauffants 16 adjacents s'appliquent contre la deuxième surface 24 du diffuseur thermique 20 de part et d'autre de l'élément de positionnement 45, avec un contact satisfaisant.

Lorsque la deuxième surface 24 présente deux rampes 44 latérales, l'élément de positionnement 45 est par exemple situé entre les deux rampes 44, et chacun des deux éléments chauffants 16 adjacents s'applique par exemple contre une rampe 44 respective.

L'ensemble de traitement thermique 2 comprend un dispositif de maintien 48 pour maintenir le dispositif de chauffage 10 appliqué contre la surface de traitement 8, le diffuseur thermique 20 étant interposé entre la région de mesure 8A et le dispositif de chauffage 10.

Le dispositif de maintien 48 comprend par exemple une bande de serrage 50 destinée à être passée autour de l'assemblage 6, en passant par-dessus le dispositif de chauffage 10 et le diffuseur thermique 20, et serrée pour maintenir le dispositif de chauffage 10 et le diffuseur thermique 20 plaqués contre la surface de traitement 8. La bande de serrage 50 est par exemple métallique.

Avantageusement, comme illustré sur la Figure 2, lorsqu'un élément de positionnement 45 est prévu, il présente une hauteur inférieure à l'épaisseur du dispositif de chauffage 10, de telle sorte que l'élément de positionnement 45 s'insère dans l'ouverture 46 depuis un côté du dispositif de chauffage 10 sans faire saillie de l'autre côté du dispositif de chauffage 10.

En particulier, lorsque le dispositif de chauffage 10 comprenant des éléments chauffants 16 articulés entre eux est posé par-dessus le diffuseur thermique 20, l'élément de positionnement 45 est en retrait par rapport à chacun des deux éléments chauffants 16 entre lesquels il est inséré.

Ceci permet à une bande de serrage 50 d'un dispositif de maintien 48 de plaquer les deux éléments chauffants 16 sur le diffuseur thermique 20 sans interférer avec l'élément de positionnement 44.

En option, l'ensemble de traitement thermique 2 est configuré pour le pilotage du dispositif de chauffage 10 en fonction de la mesure de température fournie par le capteur de température 28.

Pour ce faire, dans un exemple de réalisation, l'ensemble de traitement thermique 2 comprend une unité électronique de commande 52 reliée au capteur de température 28 par l'intermédiaire du câble de raccordement 30 pour recevoir le signal de mesure émis par le capteur de température 28 et représentatif de la température de la région de mesure 8A.

L'unité électronique de commande 52 est reliée au dispositif de chauffage 10 pour commander ce dernier en fonction du signal de mesure.

L'unité électronique de commande 52 comprend un module de commande 54 configuré pour commander le dispositif de chauffage 10 en fonction du signal de mesure fourni par le capteur de température 28.

Dans un exemple de réalisation, le module de commande 54 est une application logicielle enregistrée dans une mémoire 56 de l'unité électronique de commande 52 et exécutable par un processeur 58 de l'unité électronique de commande 52.

En variante, le module de commande 54 est un circuit logique programmable, par exemple un réseau de portes logiques programmable (ou FPGA de l'anglais « Field Programmable Gâte Array ») ou un circuit intégré spécialisé (ou ASIC de l'anglais « Application Specific Integrated Circuit »).

Pour la commande du dispositif de chauffage 10, l'unité de commande 52 est reliée par exemple à une alimentation électrique 60 du dispositif de chauffage 10, lorsque ce dernier fonctionne à l'électricité.

Dans un autre exemple de réalisation, le dispositif de chauffage 10 n'est pas piloté en fonction de la mesure de température réalisée à l'aide de l'ensemble de mesure de température 18. La mesure de température réalisée par l'ensemble de mesure de température peut servir uniquement à contrôler l'atteinte des températures requises pour la surface de traitement 8 lors de l'application du traitement thermique, par exemple lors d'un traitement thermique de détensionnement.

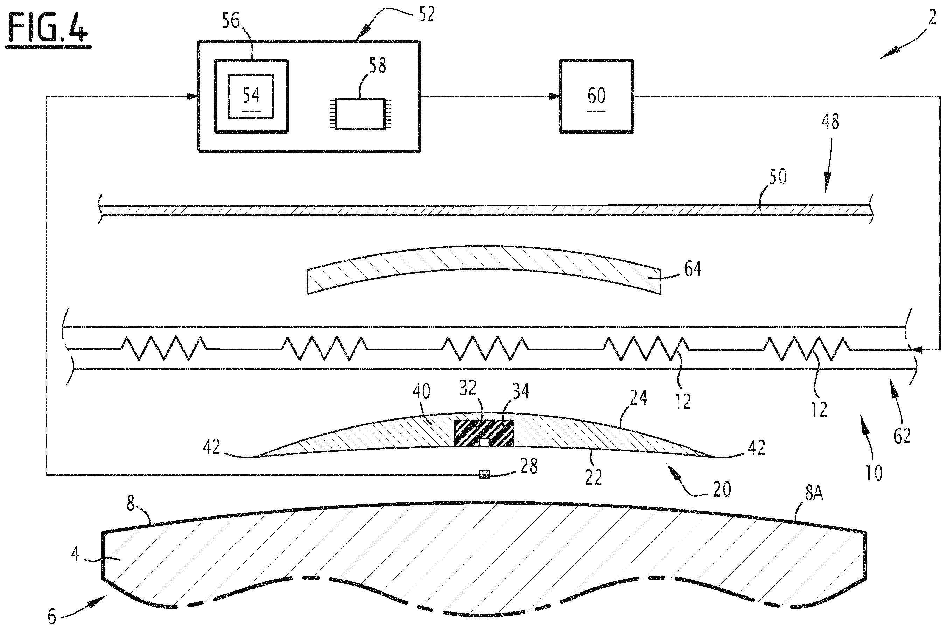

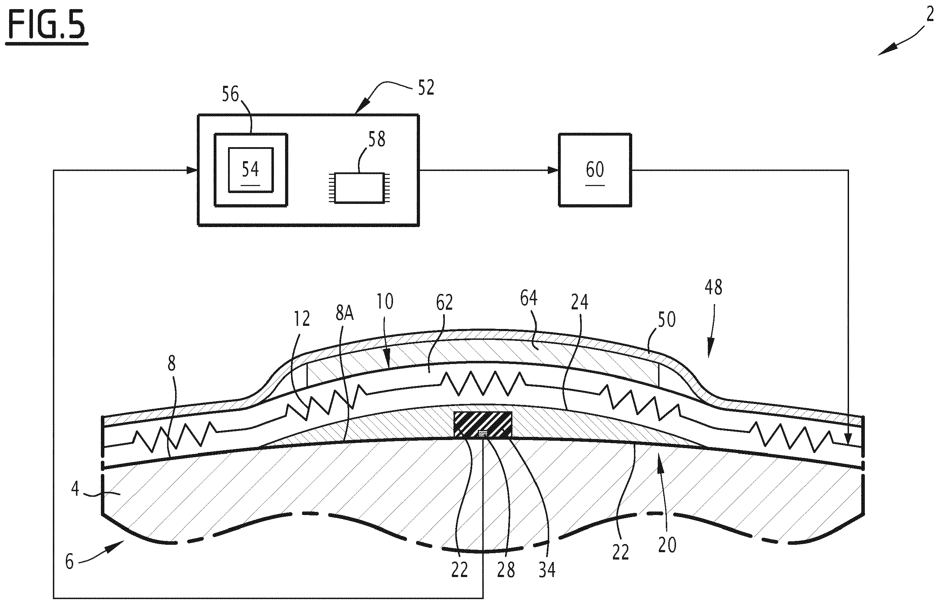

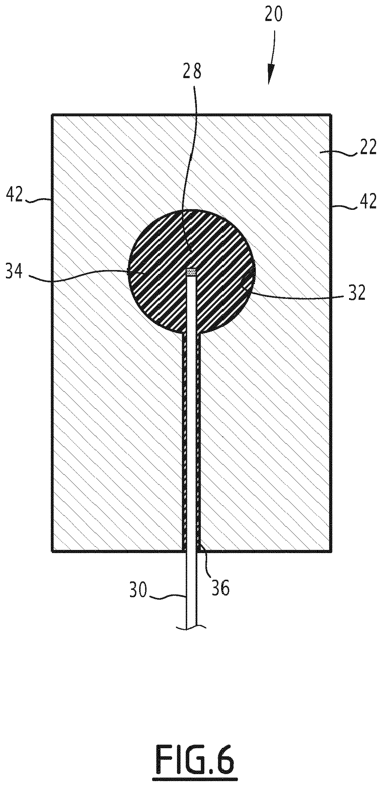

L'ensemble de traitement thermique 2 des Figures 4 à 6, sur lesquelles les références numériques aux éléments analogues à ceux de l'ensemble de traitement thermique 2 des Figures 1 à 3 ont été conservées, diffère de celui des Figures 1 à 3 en ce que la première surface 22 du diffuseur thermique 20 n'est pas plane.

La première surface 22 présente la forme d'une portion de cylindre. Ceci permet de positionner le diffuseur thermique 20 contre une surface de traitement 8 qui est elle-même une portion de cylindre, la premier surface 20 étant conformée de manière satisfaisante avec la surface de traitement 8.

La deuxième surface 24 est par exemple aussi une portion de cylindre, l'axe du cylindre dont la première surface 22 est une portion et l'axe du cylindre dont la deuxième surface 24 étant parallèles.

Le diffuseur thermique 20 présente par exemple une section transversale, prise dans un plan perpendiculaire à l'axe du cylindre dont la première surface 22 est une portion, en forme de croissant de lune, délimitée entre deux arcs de cercle, l'un correspondant à la première surface 22 et l'autre à la deuxième surface 24.

Par ailleurs, l'ensemble de traitement thermique 2 des Figures 4 à 6 diffère de celui des Figures 1 à 3 en ce que le diffuseur thermique 20 est dépourvu d'élément de positionnement.

En outre, le dispositif de chauffage 10 est formé par une couverture chauffante 62, en particulier une couverture chauffante 62 électrique. Une telle couverture chauffante 62 est pliable ce qui permet de l'enrouler autour de l'assemblage 6.

Lorsque le diffuseur thermique 20 est dépourvu d'élément de positionnement 44, il n'est pas nécessaire de prévoir une ouverture correspondante dans la couverture chauffante 62.

Optionnellement, et comme illustré sur les Figure 4 à 6, l'ensemble de traitement thermique 2 comprend une contre-plaque 64 destiné à être interposée entre le dispositif de chauffage 10 et un dispositif de maintien 48, en particulier entre le dispositif de chauffage 10 et une bande de serrage du dispositif de maintien 48, en regard du diffuseur thermique 10.

Une telle contre-plaque 64 permet un placage satisfaisant du dispositif de chauffage 10 contre le diffuseur thermique 20 pour une bonne conduction thermique entre les deux.

Les ensembles de traitement thermique 20 des Figures 1 à 3 et de celui des Figures 4 à 6 fonctionnent de manière analogues, comme décrit ci-dessous.

En fonctionnement, le diffuseur thermique 20 avec le capteur de température 28 logé dans la cavité de réception 32 est appliqué sur la région de mesure 8A de la surface de traitement 8, et le dispositif de chauffage 10 est appliqué sur la surface de traitement 8 en recouvrant le diffuseur thermique 20.

Lorsqu'un élément de positionnement 45 est disposé sur le diffuseur thermique 20 (Figure 1 à 3), le dispositif de chauffage 10 est positionné de telle sort que l'élément de positionnement 45 est inséré dans l'ouverture 46 correspondante du dispositif de chauffage 10.

Lorsqu'une contre-plaque 64 est prévue (Figure 4 à 6), celle-ci est positionnée sur le dispositif de chauffage 10, au-dessus du diffuseur thermique 20.

Le dispositif de maintien 48 est installé de manière à serrer le dispositif de chauffage 10 contre la surface de traitement 8, en maintenant aussi le diffuseur thermique 20, et, le cas échéant, la contre-plaque 64.

Le cas échéant, la bande de serrage 50 du dispositif de maintien 48 est passée autour de l'assemblage 6 de manière à serrer le dispositif de chauffage 10 contre la surface de traitement 8, le diffuseur thermique 20 étant interposé entre le dispositif de chauffage 10 et la région de mesure 8A et serré contre cette dernière.

Le capteur de température 28 fournit un signal de mesure représentatif de la température de la région de mesure 8A.

Le cas échéant, l'unité électronique de commande 52 commande le dispositif de chauffage 10 pour chauffer la zone 4 en fonction du signal de mesure fourni par le capteur de température 28 et considéré comme représentatif de la température de la zone 4, de telle manière que la zone 4 soit portée à une température déterminée pendant une durée déterminée.

Un procédé de traitement thermique d'une zone de soudure 4 d'un assemblage 6 de pièces métalliques, en particulier de pièces métalliques d'une centrale nucléaire, comprend l'application du diffuseur thermique 20 sur une région de mesure 8A d'une surface de traitement 8 de la zone 4, le diffuseur thermique 20 étant en appui sur la région de mesure 8A par sa première surface 22 dans laquelle est ménagé la cavité de réception 32 dans laquelle est reçu le capteur de température 28, le positionnement d'un dispositif de chauffage 10 sur la surface de traitement 8 pour chauffer la zone 6 en recouvrant le diffuseur thermique 20 avec le dispositif de chauffage 10, et le chauffage de la zone 6 à l'aide du dispositif de chauffage 10, la région de mesure 8A étant chauffée par le dispositif de chauffage 10 à travers le diffuseur thermique 20.

Le dispositif de chauffage 10 est piloté par exemple pour réaliser un traitement thermique de détensionnement.

En option, le dispositif de chauffage 10 est commandé en fonction d'un signal de mesure émis par le capteur de température 28 et représentatif de la température de la région de mesure 8A.

En particulier, le dispositif de chauffage 10 peut être commandé en fonction d'un signal de mesure émis par le capteur de température 28 pour chauffer la surface de traitement 8 à une température située dans une plage de température prédéterminée et pendant une durée prédéterminée.

La plage de température est par exemple comprise entre 300°C et 650°C et/ou la durée prédéterminée est par exemple comprise entre 30 minutes et 4 heures.

Lorsque le dispositif de chauffage 10 est en contact avec la surface de traitement 8 et la chauffe par conduction thermique, il existe en gradient thermique très important entre le dispositif de chauffage 10 et la surface de traitement 8.

Un capteur de température 28 qui serait disposé entre le dispositif de chauffage 10 et la surface de traitement 8 serait soumis à ce très fort gradient de température, ce qui induirait un décalage de mesure entre la température mesurée par le capteur de température 28 et la température effective de la surface de traitement 8.

En pratique, en l'absence de diffuseur thermique 20, si le dispositif de chauffe 10 est porté à 800°C, la surface de traitement 8 peut être à une température d'environ 600°C (par l'effet intrusif de la sonde de mesure 28), soit un écart de 200°C, et l'écart de température entre la température effective de la surface de traitement 8 et la température mesurée à l'aide du capteur de température 28 peut atteindre 40°C ou plus.

Avec le diffuseur thermique 20 interposé entre la surface de traitement 8 et le dispositif de chauffage 10, cela permet de diminuer le gradient de température en limitant la montée en température par dissipation thermique. En effet, ce gradient de température est diminué par la conductivité thermique du diffuseur thermique 20.

Ainsi, du fait de la présente du diffuseur thermique 20 interposé entre la surface de traitement et le dispositif de chauffage 10 dans la région de mesure, le capteur de température 28 est soumis à un gradient de température moins élevé et peut réaliser une mesure plus précise.

Le fait de positionner le capteur de température 28 à distance des parois de la cavité de réception 32 permet d'éviter un contact direct entre le capteur de température 8 et le diffuseur thermique 20, afin que le signal de mesure fourni par le capteur de température 8 correspond bien à la température de la surface de traitement 8, et non à celle du diffuseur thermique 20.

La prévision d'un corps thermiquement isolant 36 disposé dans la cavité de réception 32 en étant interposé entre le capteur de température 28 et les parois de la cavité de réception 32 permet de limiter la transmission de chaleur du diffuseur thermique 20 vers le capteur de température 28.

La mesure précise de la température de peau de la zone de soudure 4 de l'assemblage 6 au cours du traitement thermique permet d'appliquer un traitement thermique, en particulier un traitement thermique de détensionnement, de manière précise, en respectant les exigences d'un référentiel technique.

L'invention n'est pas limitée à la mesure d'une température d'une surface de traitement d'un assemblage des pièces métalliques d'une centrale nucléaire.

L'invention pourrait s'appliquer à d'autres assemblages de pièces métallique, par exemple dans le domaine pétrolier, le domaine chimique ou le domaine agro-alimentaire, en particulier à une cuve de stockage de produits.

Elle s'applique ainsi de manière générale à un assemblage de pièces métalliques assemblées par soudage nécessitant la réalisation d'un traitement thermique de détensionnement local utilisant un dispositif de chauffage appliqué sur une surface de traitement de l'assemblage, avec une mesure de température à l'aide d'un capteur de température interposé entre le dispositif de chauffage et la surface de traitement.

De manière encore plus générale, l'invention s'applique au traitement thermique d'un objet quelconque par chauffage d'une surface de traitement de cet objet.

## Revendications

1. Ensemble de mesure configuré pour mesurer la température d'une surface de traitement (8) d'un objet lors de la réalisation d'un traitement thermique de l'objet à l'aide d'un dispositif de chauffage (10) configuré pour recouvrir et chauffer la surface de traitement (8), l'ensemble de mesure comprenant un diffuseur thermique (20) configuré pour être interposé entre le dispositif de chauffage (10) et une région de mesure (8A) de la surface de traitement (8) de telle sorte que la région de mesure (8A) est chauffée par le dispositif de chauffage (10) à travers le diffuseur thermique (20), le diffuseur thermique (20) comprenant une première surface (22) destinée à être appliquée contre la région de mesure (8A) et une deuxième surface (24) destinée à être recouverte par le dispositif de chauffage (10), et un capteur de température (28) logé dans une cavité de réception (32) ménagée dans la première surface (22) pour être en contact avec la région de mesure (8A) et mesurer la température de la région de mesure (8A), en étant recouvert par le diffuseur thermique (20).

2. Ensemble de mesure selon la revendication 1, dans lequel le capteur de température (28) est maintenu dans la cavité de réception (32) en étant espacé des parois de la cavité de réception (32).

3. Ensemble de mesure selon la revendication 1 ou la revendication 2, comprenant un corps thermiquement isolant (34) inséré dans la cavité de réception (32) de manière à isoler thermiquement le capteur de température (28) des parois de la cavité de réception (32).

4. Ensemble de mesure selon l'une quelconque des revendications précédentes, dans lequel le diffuseur thermique (20) s'amincit depuis une partie centrale dans laquelle est formé la cavité de réception (32) vers au moins un bord du diffuseur thermique (20).

5. Ensemble de mesure selon la revendication 4, dans lequel le diffuseur thermique (20) s'amincit depuis la partie centrale (40) vers deux bords latéraux opposés du diffuseur thermique (20).

6. Ensemble de mesure selon l'une quelconque des revendications précédentes, comprenant un élément de positionnement (45) disposé en saillie sur la deuxième surface (24) du diffuseur thermique (20) et configuré pour s'insérer dans une ouverture (46) du dispositif de chauffage (10).

7. Ensemble de mesure selon l'une quelconque des revendications précédentes, dans lequel la première surface (22) est conformée à la région de mesure (8A).

8. Ensemble de mesure selon l'une quelconque des revendications précédentes, dans lequel la première surface (22) est plane, dans lequel la première surface (22) est une portion de surface cylindrique, dans lequel la première surface (22) est une portion de surface sphérique ou dans lequel la première surface (22) est une portion de surface conique.

9. Ensemble de mesure selon l'une quelconque des revendications précédentes, dans lequel le diffuseur thermique (20) est métallique et/ou dans lequel le diffuseur thermique (20) est réalisé en une seule pièce de matière.

10. Ensemble de mesure selon l'une quelconque des revendications précédentes, dans lequel le diffuseur thermique (20) présente la forme d'une plaque, la première surface (22) et la deuxième surface (24) étant les deux faces opposées du diffuseur thermique (20) en forme de plaque.

11. Ensemble de traitement thermique comprenant un dispositif de chauffage (10) configuré pour être appliqué sur une surface de traitement (8) d'un objet pour la chauffer, et un ensemble de mesure selon l'une quelconque des revendications précédentes.

12. Ensemble de traitement thermique selon la revendication 10, dans lequel le dispositif de chauffage (10) est configuré pour chauffer l'objet par conduction thermique entre le dispositif de chauffage (10) et la surface de traitement (8).

13. Ensemble de traitement thermique selon la revendication 10 ou la revendication 11, dans lequel le dispositif de chauffage (10) est formé d'une pluralité d'éléments chauffants (16) articulés entre eux de manière que le dispositif de chauffage (10) est flexible et conformable à la surface de traitement (8).

14. Ensemble de traitement thermique selon l'une quelconque des revendications 10 à 12, comprenant une contre-plaque (64) destinée à être disposée entre le dispositif de chauffage (10) et un dispositif de maintien (48) configuré pour maintenir le dispositif de chauffage (10) appliqué contre la surface de traitement (8), au droit du diffuseur thermique (20).

15. Procédé de traitement thermique d'un objet, en particulier d'un assemblage (6) de pièces métalliques, en particulier d'une centrale nucléaire, le procédé de traitement thermique comprenant l'application d'un diffuseur thermique (20) sur une région de mesure (8A) d'une surface de traitement (8) de l'objet, le diffuseur thermique (20) possédant une première surface (22) en appui sur la région de mesure (8A) et une deuxième surface (24) opposée à la première surface (22), un capteur de température (28) étant logé dans une cavité de réception (32) ménagée dans la première surface (22) pour mesurer la température de la région de mesure (8A), le positionnement d'un dispositif de chauffage (10) sur la surface de traitement (8), le dispositif de chauffage (10) recouvrant le diffuseur thermique (20), et le chauffage de surface de traitement (8) à l'aide du dispositif de chauffage (10), la région de mesure (8A) étant chauffée par le dispositif de chauffage (10) à travers le diffuseur thermique (20).

16. Procédé de traitement thermique selon la revendication 15, dans lequel le dispositif de chauffage (10) est commandé en fonction d'un signal de mesure émis par le capteur de température (28) pour chauffer la surface de traitement (8) à une température située dans une plage de température prédéterminée et/ou pendant une durée prédéterminée.

17. Procédé de traitement thermique selon la revendication 16, dans lequel la plage de température est comprise entre 300°C et 650°C.

18. Procédé de traitement thermique selon la revendication 16 ou 17, dans lequel la durée prédéterminée est comprise entre 30 minutes et 4 heures.

19. Procédé de traitement thermique selon l'une quelconque des revendications 15 à 18, dans lequel l'objet est un assemblage (6) de pièces métalliques soudées entre elles.

20. Procédé de traitement thermique selon la revendication 19, dans lequel la surface de traitement (8) inclut une zone de soudure (4) entre les pièces métalliques de l'assemblage (6).
